# EUROPEAN PATENT SPECIFICATION

(11) **EP 0 269 284 B1**
(45) Date of publication and mention of the grant of the patent: **04.08.1993**
(21) Application number: 87309630.9
(22) Date of filing: 30.10.1987
(51) Int. Cl.: C08G 77/60

(54) **Method for producing organosilicon polymers**
Verfahren zur Herstellung von Organosiliconpolymeren
Procédé de préparation de polymères contenant des atomes de silicium

(30) Priority: 06.11.1986 JP 262852/86
(43) Date of publication of application: 01.06.1988
(73) Proprietor: NIPPON CARBON CO., LTD., Tokyo (JP)
(72) Inventor: Ishikawa, Toshikatsu, Ohta-ku Tokyo (JP); Ichikawa, Hiroshi, Yokohama-shi Kanagawa-ken (JP); Machino, Fumikazu, Kaminiikawa-gun Toyama-ken (JP); Matsumura, Toshiya, Kaminiikawa-gun Toyama-ken (JP); Mitsuno, Shiro, Yokohama-shi Kanagawa-ken (JP)
(74) Representative: Overbury, Richard Douglas

(56) References cited:
- AT-A- 346 589
- JP-A- 5 483 099
- JP-A- 5 949 235
- US-A- 4 590 253
- PATENT ABSTRACTS OF JAPAN, vol. 8, no. 138 (C-231)[1575], 27th June 1984; & JP-A-59 49 235
- PATENT ABSTRACTS OF JAPAN, vol. 3, no. 104 (C-57), 4th September 1979, page 76 C 57; & JP-A-54 83 099
- PATENT ABSTRACTS OF JAPAN, vol. 7, no. 151 (C-174)[1296], 2nd July 1983; & JP-A-58 63 724
- PATENT ABSTRACTS OF JAPAN, vol. 5, no. 188 (C-81)[860], 27th November 1981; & JP-A-56 110 733

## Description

### BACKGROUND OF THE INVENTION

### 1. Field of the Invention

This invention relates to a method for producing organosilicon polymers and more particularly it relates to a method for producing organosilicon polymers, such as polycarbosilane, which are suitable for silicon carbide fiber production, in a high yield by thermocracking and then polycondensing a polysilane, such as a polyalkylsilane, as the starting material.

### 2. Prior Art

There have heretofore been known methods for producing organosilicon polymers such as polycarbosilane by pyrolyzing and polycondensing a polysilane such as polydimethylsilane. The known methods include those disclosed in Japanese Pat. Appln. Gazettes Nos. 52-112700, 54-83099, 58-63724, 56-110733 and 59-49235. The organosilicon polymers, such as polycarbosilane, obtained by these known methods may be fired or baked to obtain silicon carbide which finds wide use as fibers, films, sintering binders and the like.

The organosilicon polymers such as polycarbosilane which have heretofore been obtained, are not necessarily satisfactory in their yield, molecular weight, suitability for silicon carbide fiber production, and properties such as transition rate. Moreover they need a complicated or large-scale equipment for the production thereof.

For example, the method disclosed in said Japanese Laid-Open Gazette 52-112700 will exhibit a low yield when carried out under normal pressure (Example 7 of the Gazette), and will permit a high pressure to occur and require a long reaction time and expensive equipment when it is carried out in a closed system (Example 2 of the Gazette).

In addition, the method disclosed in said Japanese Laid-Open Gazette 54-83099 not only needs two steps and complicated operations but also it requires expensive equipment for the production of organosilicon polymers when it is carried out particularly at a high pressure. Further, according to the Examples of the Gazette, air is continuously introduced in an amount of several % in the second step whereby oxygen is contained in the resulting polycarbosilane with the result that silicon carbide fibers having inferior properties would be obtained if the polycarbosilane is subjected to spinning, infusibilization and heat treating. Still further, it is impossible to obtain continuous silicon carbide fibers from polycarbosilane having such a molecular weight as obtained in the Examples of the Gazette. The method disclosed in said Japanese Laid-Open Gazette 58-63724 is inferior in heat conductivity and causes local heating because it involves heating powdered material and further it needs large-scale equipment for producing organosilicon polymers because of the use of two tanks.

On the other hand, the method disclosed in said Japanese Laid-Open Gazette 56-110733 comprises recovering the produced polysilane having a low molecular weight, mixing the thus recovered polysilane with fresh starting polysilane and then reacting the resulting mixture at normal pressure in the presence of a suitable catalyst. In this known method, the polycarbosilane obtained is not preferred for silicon carbide fiber production because of the use of a catalyst such as polyborosiloxane. Further the synthesis of polyborosiloxane is complicated and troublesome. The method disclosed in said Japanese Laid-Open Gazette 59-49235 comprises pyrolyzing and polycondensing a cyclic or linear polysilane to produce a polymer having a low molecular weight and then further polymerizing the thus obtained low-molecular weight polymer to obtain a polymer having a high molecular weight. In this known method, when attempts are made to further polymerize the low-molecular weight polymer at normal pressure, the polymerization is difficult since the temperature in the polymerization system does not rise because the low-molecular weight polymer has a low boiling point. Even if such a low-molecular weight polymer, without being further polymerized, is mixed with the cyclic or linear polysilane as the starting material, then high-molecular weight polycarbosilane cannot be produced in an improved yield.

AT 346589 discloses a process for the production of high molecular weight organosilicon compounds by the pyrolysis and polycondensation of one or more linear and/or one or more cyclic polysilanes. A small portion of the desired high molecular weight compounds is removed from the reaction column and a larger portion of the high molecular weight compounds together with the low molecular weight compounds is removed and distilled to separate gas from the high molecular weight compounds. The low molecular weight compounds are returned to the reaction column.

### SUMMARY OF THE INVENTION

The present invention was made to overcome the above-mentioned drawbacks.

It is a primary object of the present invention to provide a method for producing at a low cost and in a high yield organosilicon polymers comprising polycarbosilane which are suitable for the production of silicon carbide fibers.

According to the present invention there is provided a method of manufacturing a polycarbosilane by pyrolyzing and polycondensing a polysilane in a reaction vessel whilst removing gaseous reaction products wherein
(i) the polysilane is a cyclic polysilane represented by the general formula (I); 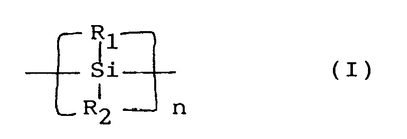 (wherein R₁ and R₂ are each an alkyl group, an aryl group or an allyl group and n is an integer of at least 4) or a linear polysilane represented by the general formula (II) 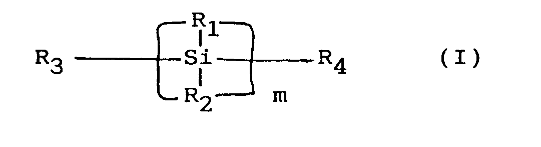 (wherein m is an integer of at least 2, R₁ and R₂ are each as defined above, and R₃ and R₄ are each a hydrogen atom, an alkyl group or an aryl group, an allyl group, chlorine, a hydroxyl group or a methoxy group)
(ii) the pyrolyzing and polycondensing reactions are carried out in an inert gas atmosphere at a pressure of from 0.19 to 0.98 MPa (2 to 10 kg/cm²) and at a temperature not exceeding 550°C, and
(iii) the gaseous reaction products are separated in a partial condenser into non-condensed gases and liquefied silicon compounds containing at least two silicon atoms and said liquefied silicon compounds are returned to said reaction vessel whereby a polycarbosilane having a number average molecular weight of from 1000 to 5000 and suitable for use as a precursor for silicon carbide fibres is obtained.

The polysilane used as the starting material in the present invention is an organosilicon compound having a polysilane skeleton selected from a cyclic polysilane represented by the general formula (1) 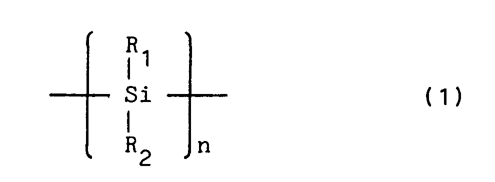
wherein R₁ and R₂ are each an alkyl group, an aryl group or an allyl group and n is an integer of at least 4 and a linear polysilane represented by the general formula (2) 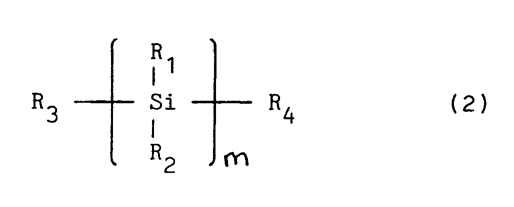
wherein m is an integer of at least 2, R₁ and R₂ are each as defined above, and R₃ and R₄ are each a hydrogen atom, an alkyl group, an aryl group, an allyl group, chlorine, a hydroxyl group or a methoxy group.

The starting material may be wholly charged at once into a reaction vessel in an inert gas atmosphere, but it is preferably charged in small portions into the reaction vessel in the same gas atmosphere by the use of a feeder. It is more preferable to feed the starting material after preheating the material by heating the feeder. It is further more preferable to feed the starting material while fusing the material within the feeder. In the case where the starting material, which is bulky, is charged at once, agitated and heated, the heat conductivity will tend to become lower and local overheating may occur thereby causing a deterioration of the resulting product in quality and yield. Also large-scale equipment will be required for heating. In contrast with this, the use of a feeder in this case will facilitate control of the reaction and permit a small-scale reaction vessel to be used. Such advantages as above will be enhanced if the starting material is fed in the thermally fused state.

The starting material polysilane is charged into the reaction vessel which is then tightly closed, after which the polysilane is heated to effect its pyrolysis and polycondensation. During the polycondensation, monosilanes, low-molecular weight silicon compounds and the like will be produced as by-products in gaseous form. Thus, in the practice of the present invention, the pressure within the reaction system is maintained at 0.19 to 0.98 MPa (2-10 Kg/cm²), more preferably 0.29 to 0.78 MPa (3-8 Kg/cm²), by the use of a pressure control valve. The gases produced as by-products are separated into non-condensed gases and condensed gases (liquid) by the use of a partial condenser. The gases so separated are continuously removed by the pressure control valve while the liquid so separated is returned to the system.

The separation of the gases produced as by-products in the partial condenser into the gas and liquid portions in the above manner, is effected in order to recover silicon compounds having at least two silicon atoms which are useful in the reaction from the gases produced as by-products and return the thus recovered silicon compounds in liquid form to the system and also in order to discharge from the system the remaining silicon compound-free gases which are silanes, monoalkylsilanes, dialkylsilanes, trialkylsilanes, tetralkylsilanes, other monosilanes and hydrogen each in gaseous form. The particularly preferred device for partial condensation used herein may be a packed tower or a partial condenser. The use of such a device will greatly increase the yield.

There is a temperature difference in boiling point between monosilanes and silicon compounds having at least two silicon atoms, and it is preferable to control the partial condenser within the range of the temperature difference although the temperature difference varies depending on the reaction pressure used. For example, if polydimethylsilane is used as the starting material and reacted at a pressure of 0.49 MPa (5 Kg/cm²), it is preferable to control the partial condenser within the range of 50-100°C, preferably 60-95°C.

The control of temperature in the above range in the system by the continuous discharge of the monosilanes, hydrogen and other gases after the separation of the by-products into the gaseous and liquid portions, is effected to prevent a pressure rise which would hinder the reaction for producing polycarbosilane. The yield of the product is increased by maintaining the internal pressure in the system in a specific range . It is possible to maintain the pressure in the system at a specific desired level as mentioned above by continuously discharging the gases from the system by the use of the pressure control valve provided on the upper part of the partial condenser fixed to the reaction vessel. If the reaction pressure used is higher than 0.98 MPa (10 Kg/cm²), then Si-Si bonds will be increased thereby deteriorating the quality of the resulting silicon carbide fibers presumably because the reaction for conversion to polycarbosilane is relatively retarded. On the other hand, if the pressure used is lower than 0.19 MPa (2 Kg/cm²), then polycarbosilane will be produced in a decreased yield. The pyrolyzing and polycondensing reactions according to the present invention are carried out at low pressures in said range thereby facilitating the design of equipment to be used and reducing the cost of the equipment. The reaction temperature is preferably be in the range of 300-550°C. If the reaction temperature used is higher than 550°C, then the reaction velocity will be too high thereby rendering it difficult to produce polycarbosilane having such a molecular weight as to be suitable for producing silicon carbide fibers. Further, it is necessary to raise the temperature gradually in order to let the reaction proceed while carrying out the gas-liquid separation. The products obtained by the pyrolyzing and polycondensing reactions are dissolved in n-hexane, toluene, xylene or the like, filtered to remove impurities, freed from the solvent by distillation and then concentrated at, for example, a temperature of 300°C and a reduced pressure of 4.0 x 10⁻⁴ MPa (3 mmHg) to obtain, in a high yield, polycarbosilane whose molecular weight is preferred for use as a precursor of silicon carbide fibers.

It is preferred that low-molecular weight polycarbosilane distilled off in said reduced-pressure distillation be mixed with the starting polysilane in a desired mixing ratio to provide a starting material for producing polycarbosilane. Particularly, the starting polysilane may be gradually fed to the low-molecular weight polycarbosilane preheated to 200-500°C by the use of a feeder thereby to eliminate the drawback of having to use large-scale equipment due to the bulkiness of polysilane as the starting material, and also to eliminate other drawbacks.

The re-use of the low-molecular weight polycarbosilane as the starting material makes it possible not only to obtain polycarbosilane having properties suitable for producing silicon carbide fibers but also to produce such polycarbosilane in an increased yield. Such re-use of low-molecular weight organosilicon compounds is preferably repeated.

It is necessary that polycarbosilane for use as a precursor of silicon carbide fibers has a number average molecular weight of 1,000-5,000. A precursor having a number average molecular weight of more than 5,000 cannot be melt spun, whereas a precursor having a number average molecular weight of less than 1,000 can be melt spun but is difficult to make infusible due to its being fusion bonded.

### BRIEF DESCRIPTION OF THE DRAWING

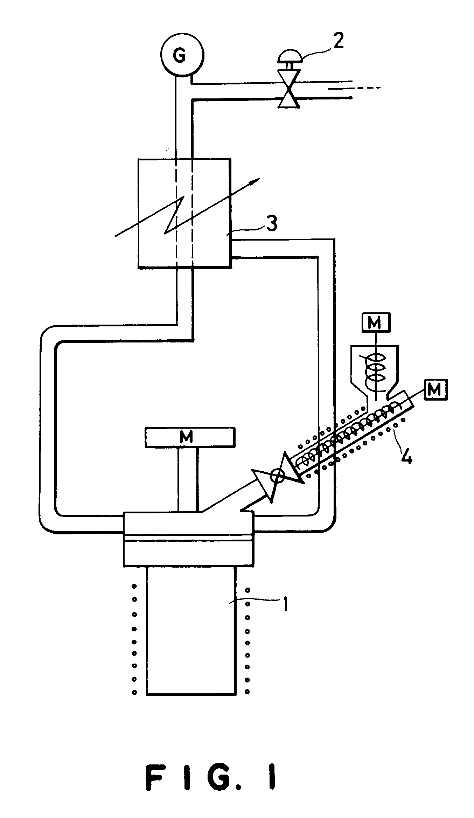

Fig. 1 is a schematic diagram showing an example of an apparatus used in connection with the method of the present invention.

Referring now to Fig. 1, numerals 1 to 4, marks M and G indicate a reaction vessel, a pressure control valve, a partial condenser, a feeder, a motor and a gauge, respectively.

### DESCRIPTION OF THE PREFERRED EMBODIMENTS

The present invention will be better understood by the following Examples and Comparative Examples in conjunction with the accompany drawing in which Fig. 1 is indicated.

### Example 1

A one-liter stainless steel reaction vessel (1) provided with a pressure control valve (2), a partial condenser (3) and a feeder (4), was charged with 300 g of polydimethylsilane, which was the starting material, without preheating and then tightly closed, after which the system was purged with nitrogen. The reaction vessel so charged was then externally heated to start the pyrolysis and polycondensation of the polydimethylsilane. The gases produced by the pyrolysis were separated, by the use of a partial condenser set to be controllable between 50°C and 100°C, into non-condensed gases (such as monosilane) and liquid silicon compounds having at least two silicon atoms to enable gas-liquid separation to be effected. The liquid so obtained by cooling was returned to the system, whereas the gases such as monosilane and hydrogen were discharged from the system by setting the pressure control valve at 0.49 MPa (5 Kg/cm²) whereby the pressure within the system was always maintained at not higher than (0.49 MPa) 5 Kg/cm². The temperature in the system was gradually raised to 470°C and maintained at this temperature for 6 hours, after which the product was dissolved in n-hexane, filtered to remove impurities and freed from the n-hexane by distillation. The product so treated was further distilled at 300°C and a reduced pressure of 4.0 x 10⁻⁴ MPa (3 mmHg) to obtain 30 g of low-molecular weight organosilicon compounds and 180 g of polycarbosilane having a boiling point of 210°C and a number average molecular weight of 1300. The yield of said polycarbosilane was 60%. This polycarbosilane exhibited IR 1350/1250 = 0.155 when its degree of formation of silicon-carbon skeleton was determined from IR 1350/1250 which was the ratio between the degree of extinction of its infra-red spectrum at 1350 cm⁻¹ (deformation vibration of Si-CH₂-Si bond) and that of its infra-red spectrum at 1250 cm⁻¹ (deformation absorption of Si-CH₃). It was inferred from this that the degree of transition to polycarbosilane was at least 96%.

The polycarbosilane so obtained was heated to 340°C and melt spun through a monohole spinneret at a velocity of 200 m/min. in air by the use of a melt spinning apparatus thereby to obtain a fibrous material having a diameter of 14 µ. The fibrous material was heated at a temperature-raising rate of 10°C/hr from room temperature up to 170°C in air in a heating furnace and maintained at this temperature for two hours to make the fibrous material infusible, after which the resultant infusible fibrous material was introduced into a heating furnace, heated up to 1200°C in 10 hours in a nitrogen atmosphere and maintained at 1200°C for two hours to fire the material and thereby obtain a black-colored lustrous silicon carbide fiber having a diameter of 10 µm. The thus obtained silicon carbide fiber had a tensile strength of 2744 MPa (280 Kg/mm²) and a tensile modulus of 2.01 x 10⁵ MPa (20.5 ton/mm²).

### Example 2

Using the same apparatus as in Example 1, 250 g of polydimethylsilane were initially charged into the reaction vessel and 250 g thereof were charged into the feeder. After the system had been purged with N₂ gas, the reaction vessel and the feeder were heated to raise their temperature. When the starting material in the reaction vessel was heated to 250-350°C and had begun to decrease in volume, the starting material preheated to about 200°C in the feeder began to be fed to the reaction vessel. This feeding was completed in about 3 hours and the reaction vessel was heated to raise its temperature, after which the same procedure as in Example 1 was followed thereby to obtain 300 g of polycarbosilane in a yield of 60%. The polycarbosilane so obtained had a number average molecular weight of 1300, a melting point of 211°C and an IR 1350/1250 of 0.155. From this it could be inferred that the degree of transition to polycarbosilane was 96%. The polycarbosilane so obtained was treated in the same manner as in Example 1 to obtain silicon carbide fibers. The thus obtained silicon carbide fibers had substantially the same properties as those obtained in Example 1.

### Example 3

The procedure of Example 2 was followed except that the starting material in the feeder was heated to about 400°C and the molten starting material was fed to the reaction vessel, the feeding being completed in 30 minutes, thereby to obtain 305 g of polycarbosilane in a yield of 61%. The polycarbosilane so obtained had a number average molecular weight of 1300, a melting point of 210°C and an IR 1350/1250 of 0.155 and was treated to obtain silicon carbide fibers in the same manner as in Example 1. The thus obtained fibers had substantially the same properties as those obtained in Example 1.

### Example 4

A reaction vessel was charged with 30 g of the low-molecular weight organosilicon compound obtained in Example 1, heated to 300°C, further gradually charged with 500 g of the starting material in the molten state continuously in one hour and then again heated to effect the reaction at 470°C for 8 hours, thereby to obtain 320 g of polycarbosilane in a yield of 64.0%. The polycarbosilane so obtained had a number average molecular weight of 1250, a melting point of 208°C and an IR 1350/1250 of 0.160. This suggested that the degree of transition to polycarbosilane was 99%. The thus obtained polycarbosilane was treated as in Example 1 to obtain silicon carbide fibers. The fibers so obtained had substantially the same properties as those obtained in Example 1.

### Example 5

A mixture of 20 wt.% diphenyldichlorosilane and 80 wt.% dimethyldichlorosilane was subjected to a dechlorinating reaction in the presence of metallic sodium to obtain polysilane. 30 g of the thus obtained polysilane were reacted as in Example 1 and then further treated in the same manner as in Example 1, thereby to obtain 182 g (average mol. wt.: 2500) of polycarbosilane containing phenyl groups in a yield of 61%. The polycarbosilane so obtained was melt spun as in Example 1 and then treated to obtain silicon carbide fibers. They had a tensile strength of 2793 MPa (285 Kg/mm²) and a tensile modulus of 1.96 x 10⁵ MPa (20.0 ton/mm²).

### Example 6

Three hundred (300) grams of dodecamethylcyclohexasilane having the formula 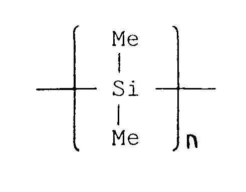
wherein n is 6,
were reacted as in Example 1 thereby to obtain 190 g of polycarbosilane in a yield of 63.3%. The polycarbosilane so obtained was treated to obtain fibers as in Example 1. The thus obtained fibers had a tensile strength of 2842 MPa (290 Kg/mm²) and a tensile modulus of 2.06 x 10⁵ MPa (21.0 ton/mm²).

### Comparative Example 1

A two-liter induced rotation type stainless steel autoclave was charged with 300 g of polydimethylsilane as the starting material and then tightly closed, after which the system was purged with nitrogen. The autoclave so charged was externally heated to start the pyrolyzing and polycondensing reactions of the polydimethylsilane and the reactions were continued at 458°C for 5.7 hours. The pressure at the end of the reactions was 5.90 MPa (60 Kg/cm²). The reaction products were then treated as in Example 1 to obtain 145 g of polycarbosilane having a melting point of 195°C and a number average molecular weight of 1350. The yield was 48.3%. It could be inferred from this that the degree of transition to polycarbosilane was 80%.

The thus obtained polycarbosilane was melt spun as in Example 1 to obtain black-colored and lustrous silicon carbide fibers having a diameter of 10 µm. These fibers had a tensile strength of 2234 MPa 228 Kg/mm² and a tensile modulus of 1.76 x 10⁵ MPa (18 ton/mm²).

### Comparative Example 2

Three hundred (300) grams of polydimethylsilane were charged into a glass reaction vessel having a water-cooled reflux portion, heated to a predetermined temperature to start its pyrolyzing and polycondensing reactions in a nitrogen stream at one atm. and then allowed to react at 455°C for 12 hours to obtain reaction products. The reaction products so obtained were treated in the same manner as in Example 1 to obtain 99 g of polycarbosilane having a melting point of 256°C and a number average molecular weight of 1368. The yield was as low as 33%. Further, said polycarbosilane had an IR 1350/1250 of 0.155. This suggested that the degree of transition to polycarbosilane was 96%.

### Comparative Example 3

Three hundred (300) grams of polydimethylsilane were charged and reacted as in Example 1 except that the partial condenser was removed from the reaction vessel used in Example 1. When the inner pressure within the reaction vessel reached 0.49 MPa (5 Kg/cm²), not only did gases begin to be discharged therefrom, but also compounds having at least two silicon atoms, which were thought to participate in the reaction, began at the same time to be distilled off from the reaction vessel. The reaction was carried out at 470°C for 6 hours as in Example 1. The thus obtained reaction products were dissolved in n-hexane, filtered and then distilled under a reduced pressure to obtain 129 g of polycarbosilane in a yield of as low as 43%.

As is apparent from the foregoing, a method for the production of organosilicon polymers according to the present invention makes it possible to produce in high yields and at low costs polycarbosilane suitable for use in the production of silicon carbide fibers.

## Claims

1. A method of manufacturing a polycarbosilane by pyrolyzing and polycondensing a polysilane in a reaction vessel whilst removing gaseous reaction products wherein
(i) the polysilane is a cyclic polysilane represented by the general formula (I); 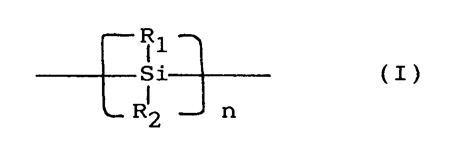 (wherein R₁ and R₂ are each an alkyl group, an aryl group or an allyl group and n is an integer of at least 4) or a linear polysilane represented by the general formula (II) 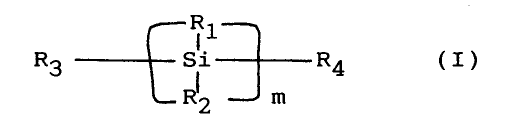 (wherein m is an integer of at least 2, R₁ and R₂ are each as defined above, and R₃ and R₄ are each a hydrogen atom, an alkyl group or an aryl group, an allyl group, chlorine, a hydroxyl group or a methoxy group)
(ii) the pyrolyzing and polycondensing reactions are carried out in an inert gas atmosphere at a pressure of from 0.19 to 0.98 MPa (2 to 10 kg/cm²) and at a temperature not exceeding 550°C, and
(iii) the gaseous reaction products are separated in a partial condenser into non-condensed gases and liquefied silicon compounds containing at least two silicon atoms and said liquefied silicon compounds are returned to said reaction vessel whereby a polycarbosilane having a number average molecular weight of from 1000 to 5000 and suitable for use as a precursor for silicon carbide fibres is obtained.

2. A method according to claim 1, wherein said pyrolysis and polycondensation are carried out at a temperature of from 300 to 550°C.

3. A method according to claim 1 or 2, wherein said partial condenser is in the form of a packed tower.

4. A method according to any preceding claim, wherein said polysilane is polydimethylsilane, the pressure is 0.49 MPa (5 kg/cm²) and the temperature in the partial condenser is from 60 to 95°C.

5. A method according to any preceding claim wherein said polysilane, after being fused in a feeder, is introduced into the reaction vessel in an inert gas atmosphere.

6. A method according to claim 5 wherein the polysilane, preheated to a temperature of from not less than 200°C to not greater than 500°C, is gradually introduced into the reaction vessel using the feeder.

7. A method according to any preceding claim wherein said polycarbosilane is subjected to reduced pressure distillation to remove low-molecular weight polycarbosilane which is admixed with polysilane in said reaction vessel.

## Patentansprüche

1. Verfahren zur Herstellung eines Polycarbosilans durch Pyrolyse und Polykondensation eines Polysilans in einem Reaktionsgefäß unter Entfernen der gasförmigen Reaktionsprodukte, wobei
(i) das Polysilan ein zyklisches Polysilan der allgemeinen Formel (I); 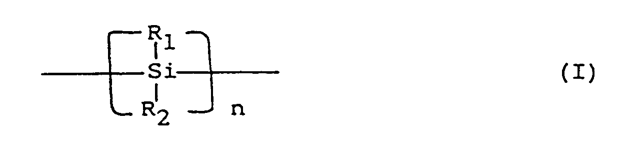 (worin R₁ und R₂ jeweils eine Alkylgruppe, eine Arylgruppe oder eine Allylgruppe sind, und n eine ganze Zahl von mindestens 4 ist) oder ein lineares Polysilan der allgemeinen Formel (II) 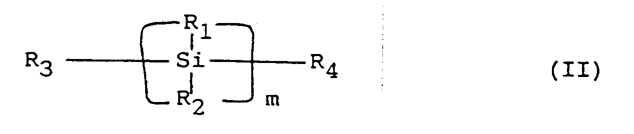 (wobei m eine ganze Zahl von mindestens 2 ist, R₁ und R₂ die zuvor gegebene Bedeutung besitzen, und R₃ und R₄ jeweils Wasserstoff, eine Alkylgruppe oder eine Arylgruppe, eine Allylgruppe, Chlor, eine Hydroxylgruppe oder eine Methoxygruppe sind);
(ii) die Pyrolyse- und Polykondensationsreaktionen in inerter Gasatmosphäre bei einem Druck von 0,19 bis 0.98 MPa (2 bis 10 kg/cm²) und einer Temperatur nicht oberhalb 550°C durchgeführt werden, und
(iii) die gasförmigen Produkte in einer partiellen Kondensationsvorrichtung in nichtkondensierte Gase und verflüssigte Siliziumverbindungen mit mindestens zwei Siliziumatomen getrennt werden, und wobei die genannten verflüssigten Siliziumverbindungen in das Reaktionsgefäß zurückgeführt werden, wobei ein Polycarbosilan mit einem mittleren Molekulargewicht von 1.000 bis 5.000 (Zahlenmittel) erhalten wird, das zur Verwendung als Vorprodukt für Siliziumkarbidfasern geeignet sind.

2. Verfahren nach Anspruch 1, wobei die Pyrolyse und die Polykondensation bei Temperaturen von 300 bis 550°C durchgeführt werden.

3. Verfahren nach Anspruch 1 oder 2, wobei die partielle Kondensationsvorrichtung ein gepackter Turm ist.

4. Verfahren nach einem der vorhergehenden Ansprüche, wobei das Polysilan Polydimethylsilan ist, der Druck 0,49 MPa (5 kg/cm²), und die Temperatur in der partiellen Kondensationsvorrichtung 60 bis 95°C betragen.

5. Verfahren nach einem der vorhergehenden Ansprüche, wobei das Polysilan nach Schmelzen in einer Fördervorrichtung in das Reaktionsgefäß unter inerter Gasatmosphäre eingeführt wird.

6. Verfahren nach Anspruch 5, wobei das Polysilan, das auf eine Temperatur von nicht weeniger als 200°C und nicht größer als 500°C vorerhitzt ist, schrittweise in das Reaktionsgefäß unter Verwendung der Fördervorrichtung eingeführt wird.

7. Verfahren nach einem der vorhergehenden Ansprüche, wobei das Polycarbosilan unter vermindertem Druck destilliert wird, um niedermolekulargewichtiges Polycarbosilan zu entfernen, das mit Polysilan im Reaktionsgefäß vermischt ist.

## Revendications

1. Procédé de fabrication d'un polycarbosilane par pyrolyse et polycondensation d'un polysilane dans un récipient de réaction permettant en même temps l'élimination des produits de réaction gazeux dans lequel
(i) le polysilane est un polysilane cyclique représenté par la formule générale (I) ; 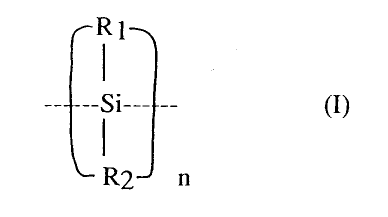 (dans laquelle R₁ et R₂ représentent chacun un groupement alkyle, un groupement aryle ou un groupement allyle et dans laquelle n est un nombre entier au moins égal à 4) ou un polysilane linéaire représenté par la formule générale II 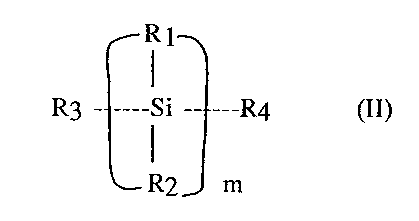 (dans laquelle m est un nombre entier au moins égal à 2, R₁ et R₂ sont tels que définis ci-dessus, et R₃ et R₄ représentent chacun un atome d'hydrogène, un groupement alkyle ou un groupement aryle, un groupement allyle, un chlore, un groupement hydroxyle ou un groupement méthoxy)
(ii) les réactions de pyrolyse et de polycondensation sont effectuées dans une atmosphère gazeuse inerte à une pression comprise entre 0,19 et 0,98 MPa (2 à 10 kg/cm²) et à une température n'excédant pas 550°C, et
(iii) les produits de réaction gazeux sont séparés dans un condenseur partiel en gaz non condensés et en composés de silicium liquéfiés contenant au moins deux atomes de silicium et les dits composés de silicium liquéfiés sont renvoyés dans le dit récipient de réaction en sorte qu'un polycarbosilane ayant un poids moléculaire moyen compris entre 1000 et 5000 et convenant comme précurseur de fibres de carbure de silicium soit obtenu.

2. Procédé selon la revendication 1, dans lequel les dites pyrolyse et polycondensation sont effectuées à une température comprise entre 300 et 550°C.

3. Procédé selon la revendication 1 ou 2, dans lequel le dit condenseur partiel est sous forme de colonne pleine.

4. Procédé selon l'une quelconque des revendications précédentes dans lequel le dit polysilane est du polydiméthylsilane, la pression est égale à 0,49 MPa (5 kg/cm²) et la température dans le condenseur partiel est comprise entre 60 et 95°C.

5. Procédé selon l'une quelconque des revendications précédentes dans lequel le dit polysilane, après avoir été fondu dans un dispositif d'alimentation, est introduit dans le récipient de réaction dans une atmosphère gazeuse inerte.

6. Procédé selon la revendication 5 dans lequel le polysilane, préchauffé à une température supérieure ou égale à 200°C et inférieure ou égale à 500°C, est introduit graduellement dans le récipient de réaction par l'intermédiaire du dispositif d'alimentation.

7. Procédé selon l'une quelconque des revendications précédentes dans lequel le dit polycarbosilane est soumis à une distillation sous pression réduite pour éliminer le polycarbosilane de faible poids moléculaire qui est mélangé au polysilane dans le dit récipient de réaction.
